Europäisches Patentamt

European Patent Office

Office européen des brevets

(19)

(11) Veröffentlichungsnummer: **0 221 255**
**A2**

(12) **EUROPÄISCHE PATENTANMELDUNG**

(21) Anmeldenummer: **86110688.8**

(22) Anmeldetag: **01.08.86**

(51) Int. Cl.⁴: **B60R 1/06**

(30) Priorität: **06.11.85 DE 8531316 U**

(43) Veröffentlichungstag der Anmeldung:
**13.05.87 Patentblatt 87/20**

(84) Benannte Vertragsstaaten:
**AT DE FR GB IT NL SE**

(71) Anmelder: **Hagus C. Luchtenberg GmbH & Co. KG**
**Wiesenstrasse 8-10**
**D-5650 Solingen-Wald(DE)**

(72) Erfinder: **Luchtenberg, Curt**
**Sonnenschein 6**
**D-5650 Solingen-Wald(DE)**

(74) Vertreter: **Selting, Günther, Dipl.-Ing. et al**
**Deichmannhaus am Hauptbahnhof**
**D-5000 Köln 1(DE)**

(54) **Fahrzeugspiegel.**

(57) An einem fahrzeugseitigen Halter (11) ist ein Armträger (25) schwenkbar angebracht, aus dem der Spiegelarm (34) seitlich hervorsteht. Ein zum Spiegel führendes Kabel ist durch Hohlräume (44,43) des Gelenks (10) hindurch in den Spiegelarm (34) hineingeführt. In dem Halter (11) ist eine drehbare Platte - (20) gelagert, die von einer Feder (17) gegen die Rastvorrichtung (21) gezogen wird. Bei einem Stoß auf den Spiegel rastet die Rastvorrichtung (21) aus. Der Spiegel kann anschließend wieder in die Normalposition zurückgestellt werden, indem die Rastvorrichtung (21) wieder einrastet. Das normale Verstellen des Spiegels erfolgt durch Lösen des Bolzens (36), Bewegen des Spiegelarmes (34) und anschließendes Anziehen des Bolzens (36).

FIG.1

## Fahrzeugspiegel

Die Erfindung betrifft einen Fahrzeugspiegel mit einem am Fahrzeug zu befestigenden, als Gelenk ausgebildeten Spiegelfuß, an dem ein Spiegelarm um eine im wesentlichen vertikale Achse - schwenkbar befestigt ist.

Fahrzeugspiegel dieser Art werden in der Regel für Lastwagen oder Geländewagen benutzt. Bei den bekannten Spiegeln verläuft das fahrzeugseitige Ende des Spiegelarmes in der Regel senkrecht nach unten in den Spiegelfuß hinein. Das Ende des Spiegelarmes ist im Spiegelfuß - schwenkbar gelagert, um den Fahrzeugspiegel einstellen zu können.

Es ist im zunehmenden Maße erforderlich, durch den Spiegelarm von Rückspiegeln elektrische Leitungen zu führen. Solche Leitungen können entweder dazu bestimmt sein, eine im Spiegelgehäuse untergebrachte Heizvorrichtung zu betätigen, oder einen Verstellmechanismus. Eine Schwierigkeit besteht darin, ein elektrisches Kabel außen an dem Gelenk vorbei in das Fahrzeuginnere zu führen. Das Kabel liegt im Bereich des Gelenks ungeschützt und frei, so daß die Gefahr von Beschädigungen besteht. Hinzu kommt, daß das Kabel in diesem Bereich in Form einer Schleife verlegt sein muß, um sich den verschiedenen Spiegelstellungen anzupassen. Auch beim Verstellen des Spiegels kann es zu Kabelbeschädigungen kommen.

Der Erfindung liegt die Aufgabe zugrunde, einen Fahrzeugspiegel der eingangs Art zu schaffen, bei dem ein vom Fahrzeug zum Spiegelgehäuse führendes Kabel auf seiner gesamten Länge geschützt untergebracht werden kann und nicht der Gefahr von Beschädigungen unterliegt.

Die Lösung dieser Aufgabe besteht erfindungsgemäß darin, daß das Gelenk aus einem fahrzeugseitigen Halter und einem drehbar hieran befestigten Armträger besteht, daß der Armträger einen Hohlraum aufweist, der in jeder Stellung des Armträgers mit einem Hohlraum des Halters in Verbindung steht und daß mindestens ein Kabel durch die beiden Hohlräume hindurch in das Innere des rohrförmigen Armes führt.

Nach der Erfindung wird das Kabel verdeckt durch das Gelenk hindurchgeführt. Zu diesem Zweck weisen der Halter und der Armträger entsprechende Hohlräume auf, die in jeder der möglichen Stellungen des Armträgers miteinander in Verbindung stehen. Der Armträger und der Halter bilden, obwohl sie relativ zueinander bewegbar sind, ein geschlossenes Gehäuse, durch das ein Kabel hindurchgeführt werden kann, ohne von außen sichtbar oder erreichbar zu sein. Im Inneren dieses Gehäuses führt das Kabel in den hohlen Spiegelarm hinein, durch den hindurch es bis ins Spiegelgehäuse verläuft.

Zweckmäßigerweise drückt eine ringförmige Stoßfläche des Armträgers gegen eine ringförmige Anschlagfläche des Halters, wobei die Stoßfläche und die Anschlagfläche die Verbindung zwischen den beiden Hohlräumen im wesentlichen abdichtend umschließen. Auf diese Weise wird auch verhindert, daß Wasser oder Schmutz in das Gelenk eindringen.

Vorzugsweise besteht der Armträger aus einem an den Halter angrenzenden ringförmigen Grundkörper und einer darauf angebrachten Kappe. Grundkörper und Kappe weisen im Inneren angeformte Halteteile auf, die das Ende des Spiegelarmes seitlich und höhenmäßig fixieren. Durch das Festklemmen des Spiegelarms, der seitlich aus dem Gehäuse austritt, werden Vibrationen des Spiegelarms weitgehend vermieden. Die Fixierung des Spiegelarms gegen radiales Herausziehen aus dem Gehäuse kann durch einen Bolzen oder eine Schraube verhindert werden, die quer durch ein Loch im Endbereich des Spiegelarmes hindurchgesteckt ist. Ebenso wichtig wie eine derartige Fixierung gegen Herausziehen ist ein spielfreies Einklemmen des Spiegelarmes zwischen den Halteteilen.

Ein Fahrzeugaußenspiegel muß in zweierlei Hinsicht bewegbar sein, nämlich einmal zum Einstellen des Spiegels durch den Fahrer und zum anderen muß er bei einem auftreffenden Stoß aus der Fahrtrichtung oder aus der Gegenrichtung nachgeben und seitlich an das Fahrzeug anklappen. Wenn der Spiegel durch einen Stoß an das Fahrzeug angeklappt ist, sollte er wieder in die Normalstellung zurückgeführt werden können, ohne daß noch mals eine Feineinstellung vorgenommen wird, d.h. die Feineinstellung sollte beim Abklappen nicht verlorengehen. Der erfindungsgemäße Fahrzeugspiegel erfüllt diese Anforderungen dadurch, daß an dem Armträger ein Bolzen abgestützt ist, der mit einer an dem Halter drehbar geführten Platte verbunden ist, und daß eine Feder vorgesehen ist, die die Platte in Richtung zum Halter spannt. Zwischen Halter und Platte ist eine Rastvorrichtung vorgesehen, die die Platte in verschiedenen Drehstellungen in bezug auf den Halter einrastend feststellt. Hierbei erfolgt die Feineinstellung des Spiegels dadurch, daß der Armträger in bezug auf die Platte verdreht wird. Wird der Spiegel in der gewählten Stellung durch Festziehen des Bolzens arretiert, so kann er beim auftretenden Stoß dennoch nachgeben, weil nämlich die Rasteinrichtung auslöst und die Platte die Drehbewegung des Armträgers mitmacht. Wird der Spiegel anschließend in seine Grundstellung zurückgebracht, so rastet die Rasteinrichtung von neuem ein. Wichtig ist, daß bei eingestelltem Spiegel das Auslösemoment der Rasteinrichtung kleiner ist als das Moment, das zum Verstellen des Spiegels erforderlich ist. Diese Forderung kann in einfacher Weise dadurch erfüllt werden, daß die Platte und der Armträger ineinandergreifende Rastkränze aufweisen. Durch Festziehen des Bolzens werden diese Rastkränze gegeneinandergedrückt, so daß Platte und Armträger nicht gegeneinander verdreht werden können. Zum Verstellen des Spiegels wird der Bolzen gelöst, so daß der Armträger auf die gewünschte Stellung eingestellt werden kann, während die Platte durch die Rasteinrichtung festgehalten wird. Anschließend wird der Bolzen festgezogen, so daß die Rastkränze wieder ineinandergreifen.

Im folgenden wird unter Bezugnahme auf die Zeichnungen ein Ausführungsbeispiel der Erfindung näher erläutert.

Es zeigen:

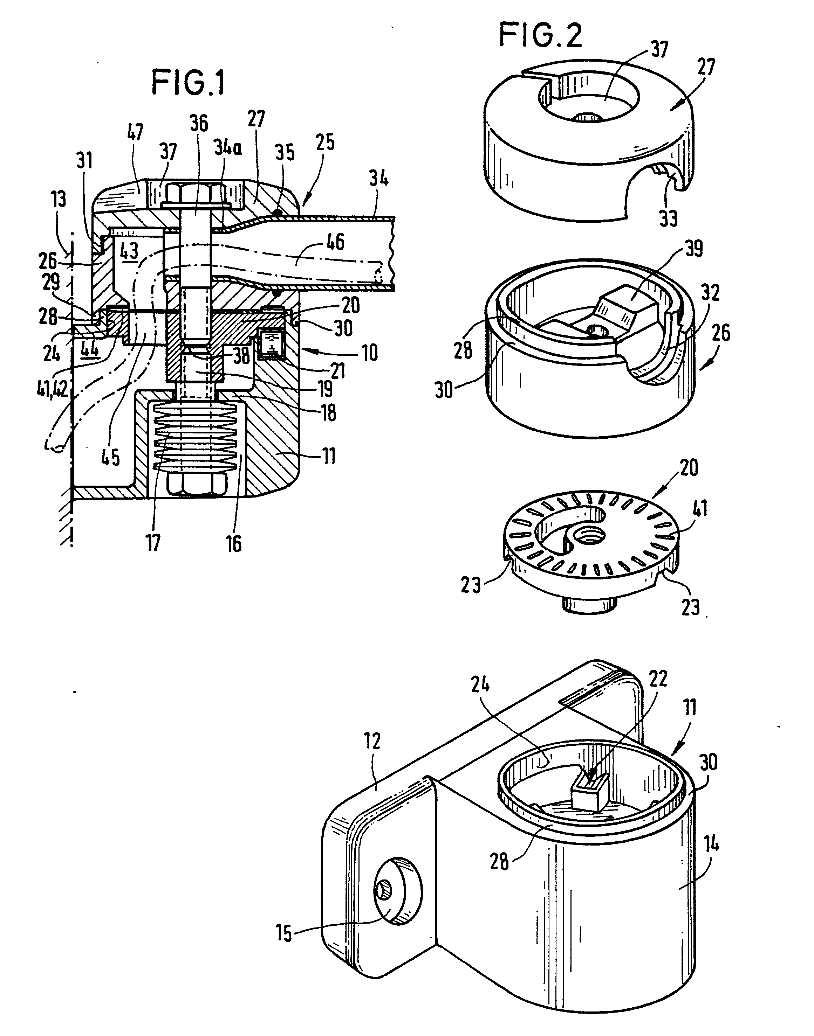

Fig. 1 einen Längsschnitt durch das Gelenk des am Fahrzeug befestigten Außenspiegels,

Fig. 2 eine Explosionsdarstellung des Gelenks nach Fig. 1,

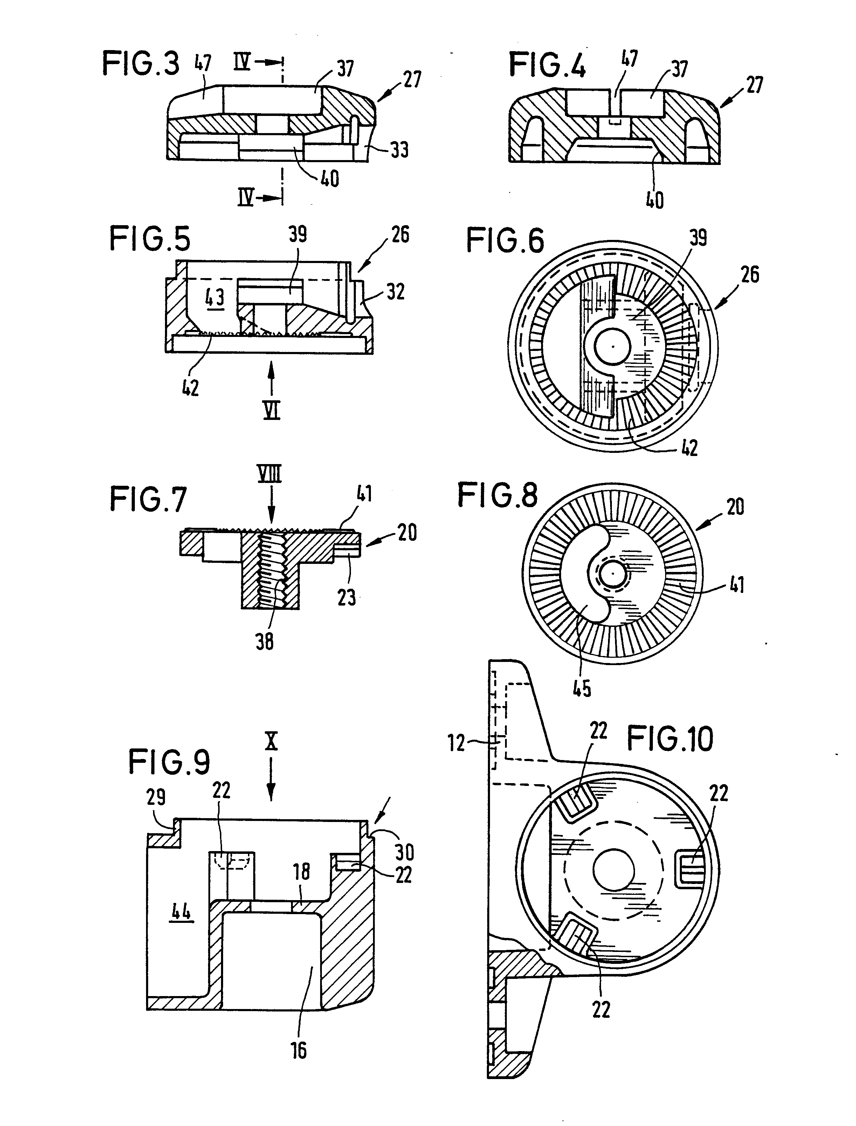

Fig. 3 einen Schnitt durch die Kappe,

Fig. 4 einen Schnitt entlang der Linie IV-IV von Fig. 3,

Fig. 5 einen Schnitt durch den Grundkörper,

Fig. 6 eine Ansicht des Grundkörpers aus Richtung des Pfeiles VI von Fig. 5,

Fig. 7 einen Schnitt durch die Platte,

Fig. 8 eine Ansicht der Platte aus Richtung des Pfeiles VIII,

Fig. 9 einen Schnitt durch den Halter, und

Fig.10 eine Draufsicht des Halters aus Richtung des Pfeiles X von Fig. 9.

Das dargestellte Gelenk 10, das den Spiegelfuß eines Fahrzeugaußenspiegels bildet, weist einen Halter 11 auf, der einstückig, z.B. aus Druckguß, hergestellt ist. Eine Platte 12 des Halters 11 dient zur Befestigung am Fahrzeug 13. Von dem Mittelteil der Platte 12 steht ein im wesentlichen zylindrisches Gehäuse 14 ab, dessen Achse parallel zur Plattenebene verläuft. Zu beiden Seiten des Gehäuses 14 sind an der Platte 12 Befestigungslöcher 15 angebracht. Wegen dieser Ausbildung des Halters 11 kann der Spiegel wahlweise als Rechtsspiegel oder als Linksspiegel verwendet werden, ohne daß irgendwelche Veränderungen vorzunehmen sind.

Die Bodenwand des Halters 11 bildet eine Ausnehmung 16, in der ein Satz Tellerfedern 17 angeordnet ist. Durch die Tellerfedern 17 und durch ein Loch in der Bodenwand 18 der Ausnehmung 16 ragt eine Schraube 19 hindurch, deren Kopf an den Tellerfedern abgestützt ist und deren Gewindeteil in einen rohrförmigen Ansatz der Platte 20 eingeschraubt ist. Die Tellerfedern 17 ziehen über die Schraube 19 die Platte 20 in den Halter 11 hinein. Andererseits ist die Platte 20 durch Rollen 21 abgestützt, welche in Nestern 22 des Halters 11 aufgenommen sind und in Ausnehmungen 23 an der Unterseite der Platte 20 hineinragen. Im vorliegenden Fall sind drei Rollen 21 umfangsmäßig mit gleichen Winkelabständen verteilt angeordnet, um die Platte 20 in bezug auf den Halter 11 axial abzustützen. Die Rollen 21 greifen in der Nähe des Randes der Platte 20 an. Umfangsmäßig ist die Platte 20 an dem Halter 11 dadurch festgelegt, daß ihr Rand in der oberen kreisförmigen Öffnung 24 des Halters 11 geführt ist.

An die Öffnung 24 schließt sich der Armträger 25 an, der aus dem außen zylindrischen Grundkörper 26 und der diesen Grundkörper nach oben abschließenden Kappe 27 besteht.

Der die obere Öffnung 24 des Halters 14 umgebende aufragende Rand 28 wird von einem ringförmigen Rand 29 am unteren Ende des Grundkörpers 26 umschlossen. Das untere Ende des Randes 29 bildet eine Stoßfläche, die gegen die ringförmige Anschlagfläche 30 des Halters 14 drückt. Durch passendes Ineinandergreifen der Ränder 28 und 29 wird die Stoßfuge zwischen Halter 11 und Grundkörper 26 abgedichtet. Eine ähnliche Stoßfuge 31 befindet sich zwischen Grundkörper 26 und Kappe 27.

Der Grundkörper 26 und die Kappe 27 weisen im Bereich der Stoßfuge 31 jeweils eine seitliche halbkreisförmige Öffnung 32 bzw. 33 auf. Diese Öffnungen ergänzen sich zur Bildung einer Durchtrittsöffnung für den rohrförmigen Spiegelarm 34, der radial in den Armträger 25 hineinführt. In den Öffnungen 32 und 33 sind Nuten zur Aufnahme eines den Spiegelarm 34 umschließenden Dichtringes 35 vorgesehen. Das Ende 34a des Spiegelarms 34 im Innern des Armträgers 25 ist abgeflacht und durch eine Querbohrung dieses abgeflachten Endes ist der Bolzen 36 hindurchgesteckt. Der Kopf des Bolzens 36 stützt sich auf den Grund einer Ausnehmung 37 in der Stirnseite der Kappe 27 ab. Der Schaft des Bolzens 36 geht durch miteinander fluchtende Bohrungen der Kappe 27 und des Grundkörpers 26 hindurch. Das Bolzengewinde ist in dieselbe Gewindebohrung 38 des rohrförmigen Ansatzes der Platte 20 eingeschraubt, in die auch das Gewinde des Bolzens 19 von der Gegenseite her geschraubt ist. Die Bolzen 19 und 36 sind entlang einer gemeinsamen Achse mit gegeneinander gerichteten Gewindeteilen angeordnet.

Die Fixierung des Endes des Spiegelarmes 34 im Innern des Armträgers 35 erfolgt durch Halteteile 39,40, die dem Grundkörper 26 und der Kappe 27 angeformt sind. Diese Halteteile 39 und 40 sind brückenförmige Stege mit schrägen Flanken, zwischen denen das abgeflachte Ende 34a in vertikaler Richtung und seitlich fixiert wird, wenn der Bolzen 26 an der Platte 20 festgezogen wird.

Die Platte 20 und der Grundkörper 26 weisen an ihren einander zugewandten Flächen jeweils einen Rastkranz 41 bzw. 42 auf, der aus radial angeordneten Zähnen besteht. Die Zähne der Rastkränze 41 und 42 rasten ineinander ein, wenn der Bolzen 36 festgezogen wird.

Im Innern des Grundkörpers 26 befindet sich ein Hohlraum 43 und im Innern des Halters 11 befindet sich ebenfalls ein Hohlraum 44. Die beiden Hohlräume 43 und 44 stehen über ein bogenförmiges Langloch 45 der Platte miteinander in Verbindung. Das Langloch 45 ist um die Achse der Bolzen 19 und 36, die gleichzeitig die Gelenkachse bildet, gekrümmt. Der Hohlraum 44 ist zur Wand des Fahrzeugs 13 hin offen, so daß aus dem Fahrzeug heraus ein Kabel 46 durch die Hohlräume 44 und 43 hindurch in das Innere der Spiegelstange 34 geführt werden kann.

Wenn der Spiegelarm 34 durch den Fahrer auf die gewünschte Position eingestellt werden soll, wird der Bolzen 36 mit einem Steckschlüssel gelöst, so daß. die Rastkränze 41 und 42 nicht mehr fest gegeneinander gedrückt werden. Der Spiegelarm kann dann leicht verstellt werden. Anschließend wird der Bolzen 36 festgezogen. Die Platte 20 wird von dem Bolzen 19 stets in den Hohlraum 44 des Halters 11 hineingezogen, wo sie mit ihrem Rand an den Rollen 21 abgestützt ist. Wenn auf den Spiegel eine von vorne oder hinten einwirkende Stoßkraft ausgeübt wird, rasten die Ausnehmungen 23 aus den Rollen 21 aus, wodurch die Federn 17 zusammengedrückt werden. Nach dem Ausrasten kann der Spiegelarm 34 um die vertikale Achse herum in einem Winkel von bis zu 120° frei verschwenkt werden. Wenn der Spiegel anschließend wieder in seine Normalposition gebracht werden soll, kann er zurückgedreht werden, wobei sich die Platte 20 zusammen mit dem Armträger 25 um die vertikale Achse herum dreht. In der Normalstellung rasten die Ausnehmungen 23 wieder an den Rollen 21 ein. Bei jeder Stellung des Spiegelarmes 34 führt das Kabel 46 ungehindert durch den bogenförmigen Schlitz 45 hindurch, der sich über einen Winkel von nahezu 180° erstreckt. Die Kanten des Schlitzes 45 sind abgerundet, so daß sie nicht in das Kabel einschneiden können.

Von der Ausnehmung 37 in der oberen Stirnwand der Kappe 27 führt ein radialer Schlitz 47 nach außen, um Regenwasser ableiten zu können.

**Ansprüche**

1. Fahrzeugspiegel mit einem am Fahrzeug zu befestigenden, als Gelenk ausgebildeten Spiegelfuß, an dem ein Spiegelarm um eine im wesentliche vertikale Achse schwenkbar befestigt ist, **dadurch gekennzeichnet,** daß das Gelenk (10) aus einem fahrzeugseitigen Halter (11) und einem drehbar hieran befestigten Armträger (25) besteht, daß der Armträger einen Hohlraum (43) aufweist, der in jeder möglichen Stellung des Armträgers mit einem Hohlraum (44) des Halters (11) in Verbindung steht, und daß mindestens ein Kabel (46) durch die beiden Hohlräume hindurch in das Innere des rohrförmigen Armes (34) führt.

2. Fahrzeugspiegel nach Anspruch 1, dadurch gekennzeichnet, daß der Armträger (25) eine äußere ringförmige Stoßfläche aufweist, die gegen eine ringförmige Anschlagfläche (30) des Halters (11) drückt, und daß die Stoßfläche und die Anschlagfläche die Verbindung zwischen den beiden Hohlräumen (43,44) im wesentlichen abdichtend umschließen.

3. Fahrzeugspiegel nach Anspruch 1 oder 2, dadurch gekennzeichnet, daß der Armträger (25) aus einem an den Halter (11) angrenzenden ringförmigen Grundkörper (26) und einer darauf angebrachten Kappe (27) besteht und daß Grundkörper (26) und Kappe (27) im Inneren angeformte Halteteile (39,40) aufweisen, die das Ende (34a) des Spiegelarmes (34) seitlich und höhenmäßig fixieren.

4. Fahrzeugspiegel nach einem der Ansprüche 1 bis 3, dadurch gekennzeichnet, daß an dem Armträger (25) ein Bolzen (36) abgestützt ist, der mit einer an dem Halter (11) drehbar geführten Platte (20) verbunden ist, und daß eine Feder (17) vorgesehen ist, die die Platte (20) in Richtung zum Halter (11) hin spannt.

5. Fahrzeugspiegel nach Anspruch 4, dadurch gekennzeichnet, daß zwischen Halter (11) und Platte (20) eine Rasteinrichtung (21) vorgesehen ist, die die Platte (20) in mindestens einer Drehstellung in Bezug auf den Halter (11) einrastend festhält.

6. Fahrzeugspiegel nach Anspruch 4 oder 5, dadurch gekennzeichnet, daß die Platte (20) und der Armträger (25) ineinandergreifende Rastkränze (41,42) aufweisen.

7. Fahrzeugspiegel nach einem der Ansprüche 4 bis 6, dadurch gekennzeichnet, daß der Bolzen (36) durch das abgeflachte Ende (34a) des Spiegelarmes (34) quer hindurchragt.

8. Fahrzeugspiegel nach 1 bis 7, dadurch gekennzeichnet, daß die beiden Hohlräume (43,44) durch einen bogenförmigen Schlitz (45) der Platte (20) miteinander verbunden sind.

FIG.1

FIG.2

FIG.3 FIG.4 FIG.5 FIG.6 FIG.7 FIG.8 FIG.9 FIG.10